# EUROPÄISCHE PATENTSCHRIFT

(11) **EP 0 466 881 B1**
(45) Veröffentlichungstag und Bekanntmachung des Hinweises auf die Patenterteilung: **22.03.1995**
(21) Anmeldenummer: 91903325.8
(22) Anmeldetag: 02.02.1991
(51) Int. Cl.: G01J 9/00, G01M 11/02

(54) **WELLENFRONTSENSOR**
WAVE FRONT SENSOR
CAPTEUR DE FRONTS D'ONDES

(30) Priorität: 07.02.1990 DE 4003698
(43) Veröffentlichungstag der Anmeldung: 22.01.1992
(73) Patentinhaber: Leica AG, CH-9435 Heerbrugg (CH)
(72) Erfinder: BRAUNECKER, Bernhard, CH-9435 Rebstein (CH); GÄCHTER, Bernhard, CH-9436 Balgach (CH); HUISER, André, verstorben (DE)
(86) Internationale Anmeldenummer: EP9100194
(87) Internationale Veröffentlichungsnummer: WO9112502

(56) Entgegenhaltungen:
- US-A- 4 441 019
- US-A- 4 641 962
- Optical Engineering, Band 19, Nr. 3, Mai/Juni 1980, T.M. Cannon et al.: "Coded aperture imaging: many holes make light work", Seiten 283-289
- Analytical Chemistry, Band 61, Nr. 11, 1. Juni 1989, American Chemical Society, Washington DC, US, P.J. Treado et al.: "A thousand points of light: The Hadamard transform in chemical analysis and instrumentation", Seiten 723A, 724A, 727A-729A, 731A-732A, 734A

## Beschreibung

Die Erfindung betrifft einen Wellenfrontsensor.

Bekannte Wellenfrontsensoren arbeiten mit Interferometrie oder Holografie. Diese sind empfindlich gegen Umwelteinflüsse wie Temperaturänderungen.

Die Objektivprüfung nach Hartmann, bekannt z.B. aus DE 33 18 293 A1, tastet mit einem oder mehreren Strahlen, die durch eine bewegliche Lochblende mit einem oder mehreren Löchern ausgeblendet werden, die Objektivöffnung ab und verwendet einen ortsempfindlichen Detektor, insbesondere einen fotografischen Fim, der vor oder hinter der Fokusebene angeordnet ist. Im Falle mehrerer Löcher (DE 33 18 293 A1) ist vorgesehen, den Detektor so anzuordnen und auszubilden, daß die Signale zu den einzelnen Löchern getrennt aufgenommen werden.

In D. Malacara, Optical Shop Testing, Kap. 10 I. Ghozeil, Hartmann and Other Screen Tests, pp. 323 ff, Wiley New York 1978, ist der Hartmann-Test in Varianten und auch die Auswertetheorie beschrieben.

Optische Multiplexverfahren mit Code-Matrizen nach Hadamard sind in M. Hewitt, N.J.A. Sloane, Hadamard Transform Optics, Academic Press New York, 1979 für Spektrometer und Bildanalysesysteme beschrieben. Damit kann eine wesentliche Rauschunterdrückung erreicht werden.

Die Aufgabe der Erfindung ist die Bereitstellung eines effizienten und robusten rauscharmen Wellenfrontsensors mit dem Amplitude und Phase der Wellenfront bestimmt werden können. Daraus kann dann auch das Fernfeld der Welle bestimmt werden.

Dies wird gelöst durch einen Wellenfrontsensor mit einem fokussierenden optischen System, einer Lochblende mit einer Mehrzahl gleichzeitig im Strahlengang befindlicher Löcher in codierter Anordnung, einer Einrichtung zur Fortschaltung der Lochblende, so daß nacheinander eine Vielzahl verschiedener codierter Anordnungen von Löchern im Strahlengang liegen und insgesamt der ganze Querschnitt des Strahlengangs mehrfach mit verschiedenen codierten Anordnungen von Löchern abgetastet wird, einem nahe der Fokusebene des optischen Systems angeordneten ortsauflösenden Lichtdetektor, der jeweils Lage und Intensität des Lichtflecks bestimmt, der aus der Überlagerung der von den Löchern erzeugten Mehrzahl von Strahlenbündeln resultiert, so daß ein Multiplex-Effekt auftritt, und einer Speicher- und Recheneinheit, welche die vom Lichtdetektor bestimmten Lage- und Intensitätswerte unter Verwendung des Codes der Anordnung der Löcher rücktransformiert zu Phase und Amplitude der Wellenfront.

Vorteilhafte Weiterbildungen und Varianten sind Gegenstand der abhängigen Ansprüche 2 bis 13.

Die Erfindung wird mit Hilfe der Zeichnung erläutert. Es zeigen:
- Fig. 1: schematisch den Gesamtaufbau eines Wellenfrontsensors,
- Fig. 2: eine Variante mit telezentrischer Optik und rotierender Scheibe als Träger der Lochblende,
- Fig. 3: eine Scheibe mit Lochblende nach einem zyklischen Hadamard-Code mit radialer Lochanordnung,
- Fig. 4: eine Scheibe mit Lochblenden, die orthogonal codierte Bereiche bilden.

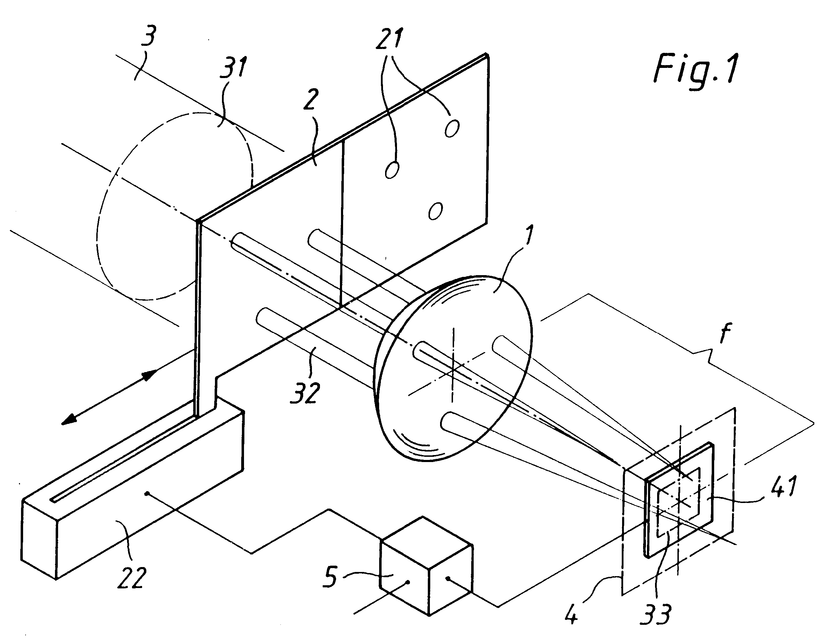

Der in Fig. 1 dargestellte Wellenfrontsensor enthält ein hoch korrigiertes fokussierendes optisches System 1, dargestellt als einfache Sammellinse, eine Lochblende 2, die in dem der Wellenfront 31 entsprechenden parallelen Strahlengang 3 eine Mehrzahl von codiert angeordneten Löchern 21 aufweist, und in der Fokusebene 4 (Abstand f von der Linsenhauptebene) einen hoch ortsauflösenden Lichtdetektor 41.

Die die Löcher 21 passierenden Strahlenbündel 32 haben ihren realen Fokus abhängig von der Störung der Wellenfront 31 an Orten, die vom idealen Fokus abweichen. Sie überlagern sich jedoch auf dem Detektor 41 zu einem Lichtfleck 33. Der Detektor 41 ist so groß gewählt, daß der gesamte Lichtfleck, der bei Wegnahme der Lochblende 2 entsteht, voll erfaßt werden kann. Damit ergibt sich ein Multiplex-Effekt und die damit verbundene Rauschunterdrückung. Ein geeigneter Detektor 41 ist ein Lateraldetektor Typ SiTEK 2L4 mit 4 × 4 mm² Detektorfläche und einer Ortsauflösung für den Intensitätsschwerpunkt des Lichtflecks 33 im Nanometerbereich.

Die Lochblende 2 ist mit einer Einrichtung zur Fortschaltung 22 verbunden, die nacheinander verschieden codierte Anordnungen von Löchern 21 in den Strahlengang 3 bringt.

Das wird so oft wiederholt, bis insgesamt der ganze Querschnitt des Strahlengangs 3 mit allen Rasterpunkten mehrfach in Kombination mit verschiedenen anderen Rasterpunkten abgetastet ist.

Der Lichtdetektor 41 und die Einrichtung 22 sind mit einer Speicher- und Recheneinheit 5 verbunden, welche die vom Lichtdetektor 41 bestimmten Lage- und Intensitätswerte unter Verwendung des Codes der Anordnung der Löcher 21 rücktransformiert zu Phase und Amplitude der Wellenfront.

Als Code ist insbesondere ein zyklischer Hadamard-Code geeignet.

Die Rücktransformation kann so erfolgen, daß mit z. B. aus M. Hewitt, N. J. A. Sloane, a.a.0. bekannten Algorithmen ein "Demultiplex"-Schritt durchgeführt wird, der für jedes Rasterelement der Lochblende den je einzeln erzeugten Lichtfleck nach Lage und Intensität bestimmt. Damit kann dann nach der aus D. Malacara, I. Ghozeil, a.a.0. bekannten Theorie die Verteilung von Phasen und Amplitude über die Wellenfront bestimmt werden.

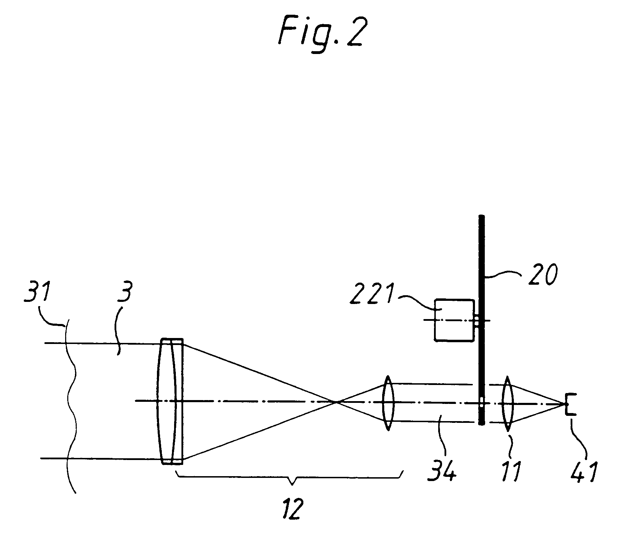

Eine Variante zeigt Fig. 2. Zur Vermessung von Wellenfronten 31 großen Durchmessers, z.B. 100 mm, enthält das fokussierende optische System 1 eine telezentrische Optik 12, welche den Strahlengang 3 in ein paralleles Strahlenbündel mit reduziertem Querschnitt 34 umwandelt, in dem die Lochblende 2 vor einer Sammellinse 11 angeordnet ist. Die Lochblende 2 ist auf einer Scheibe 20 angeordnet, welche durch einen Schrittmotor 221 gedreht wird. Der reduzierte Querschnitt 34 kann z.B. 8 mm Durchmesser haben, der mit einem 8 × 8 Raster mit Löchern 21 von 0,8 mm Durchmesser im Rastermaß 1 mm abgetastet wird.

Zur Bestimmung relativer Deformationen der Wellenfront 31 müssen die Lage des Sensors 41 und die Stabilität der Lochblende nicht besonders gut bekannt sein, da sie ausgemittelt werden. Die rotierende Scheibe kann daher gegenüber der Optik schwingungsgedämpft aufgehängt werden, so daß die Ortsauflösung des Lichtdetektors 41 nicht durch Schwingungen des Scheibenantriebs 22, 221 beeinträchtigt wird. Die Anordnung ist auch weitgehend unempfindlich gegen Temperatur- und Druckschwankungen.

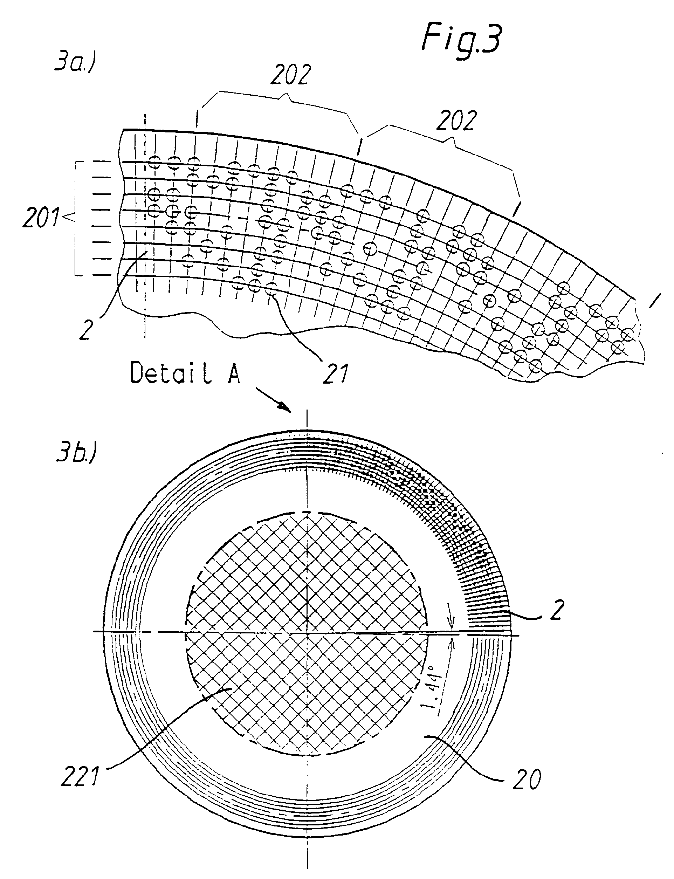

Fig. 3a) zeigt einen Detailausschnitt einer Scheibe 20 nach Fig. 3b) mit einer Lochblende 2 nach einem zyklischen Hadamard-Code mit radialer Anordnung der Löcher 21 in acht Codezeilen und mit einer acht Schritt-Periode 202 der Codespalten in radialer Anordnung. Ein Schrittmotor 221 treibt die Scheibe 20 an und hat den gleichen Schrittwinkel von 1,44° wie die Lochblende 2.

Zur Messung wird jeweils um einen solchen Winkelschritt weitergeschaltet.

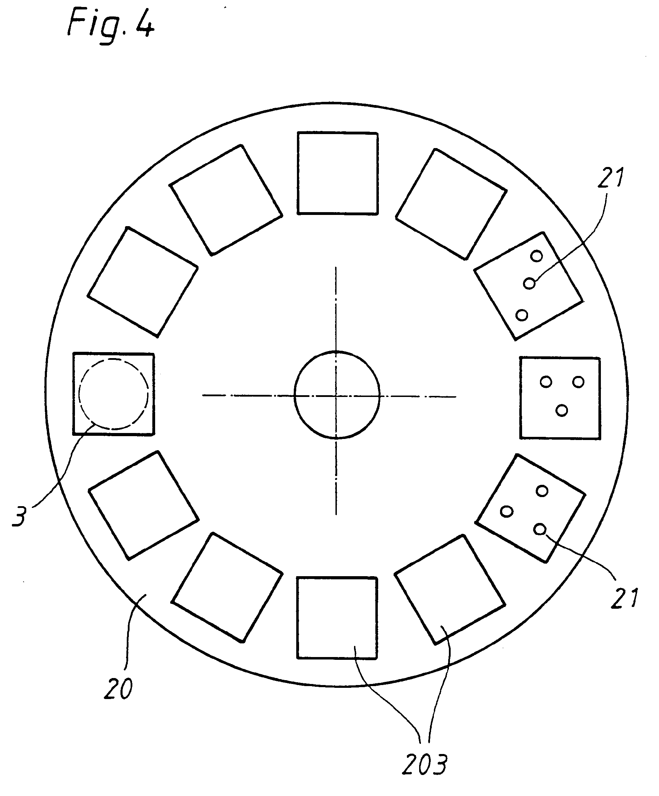

Fig. 4 zeigt eine alternative Scheibe 20, deren Lochblenden 2 orthogonal mit Löchern 21 codierte Bereiche 203 bilden, welche tangential angeordnet sind und nacheinander in den Strahlengang 3 gedreht werden. Hierbei ist eine symmetrische Verteilung der Abtastpunkte über die Wellenfront 31 erreichbar.

Mit einem Wellenfrontsensor wie beschrieben lassen sich innerhalb weniger Sekunden Meßzeit Wellenfronten 31 von bis zu rund 100 mm Durchmesser mit einer Lichtleistung von einzelnen Milliwatt auf einzelne Prozent der Wellenlänge genau vermessen.

Die unvermeidliche Störung der Welle durch das optische System 1 läßt sich korrigieren durch Eichung dieses Einflusses. Dazu ist ein "Verfahren und Anordnung zur Prüfung optischer Systeme oder Komponenten" gemäß der gleichzeitig eingereichten Patentanmeldung (A 2332) der selben Anmelderin geeignet.

Die Lochblende 2 kann auch im konvergenten Strahlengang, z. B. zwischen Linse 11 und Detektor 41 angeordnet werden.

Auf mechanisch bewegte Teile kann ganz verzichtet werden, wenn die Lochblende 2 als elektrooptische Verschlußmatrix, z.B. in LCD-Technik, ausgeführt ist.

## Patentansprüche

1. Wellenfrontsensor mit
- einem fokussierenden optischen System (1),
- einer Lochblende (2) mit einer Mehrzahl gleichzeitig im Strahlengang (3) befindlicher Löcher (21) in codierter Anordnung, gekennzeichnet durch
- eine Einrichtung (22) zur Fortschaltung der Lochblende (2), so daß nacheinander eine Vielzahl verschiedener codierter Anordnungen von Löchern (21) im Strahlengang (3) liegen und insgesamt der ganze Querschnitt des Strahlengangs (3) mehrfach mit verschiedenen codierten Anordnungen von Löchern (21) abgetastet wird,
- einen nahe der Fokusebene (4) des optischen Systems (1) angeordneten ortsauflösenden Lichtdetektor (41), der jeweils Lage und Intensität des Lichtflecks (33) bestimmt, der aus der Überlagerung der von den Löchern (21) erzeugten Mehrzahl von Strahlenbündeln (32) resultiert, und
- eine Speicher- und Recheneinheit (5), welche die vom Lichtdetektor (41) bestimmten Lage- und Intensitätswerte unter Verwendung des Codes der Anordnung der Löcher (21) rücktransformiert zu Phase und Amplitude der Wellenfront.

2. Wellenfrontsensor nach Anspruch 1, **dadurch gekennzeichnet**, daß der Code der Lochblende (2) ein Hadamard-Code ist.

3. Wellenfrontsensor nach Anspruch 2, **dadurch gekennzeichnet**, daß der Code der Lochblende (2) ein zyklischer Hadamard-Code ist.

4. Wellenfrontsensor nach Anspruch 1, **dadurch gekennzeichnet**, daß die Lochblende (2) auf einer Scheibe (20) angebracht ist und durch das Drehen der Scheibe (20) fortgeschaltet wird.

5. Wellenfrontsensor nach Anspruch 3 und 4, **dadurch gekennzeichnet**, daß die Löcher (21) radial codiert angeordnet sind und der Drehantrieb durch einen Schrittmotor (21) erfolgt (Fig. 3).

6. Wellenfrontsensor nach Anspruch 2 und 4, **dadurch gekennzeichnet**, daß die Löcher (21) in orthogonal codierten Bereichen (203) angeordnet sind, welche den Durchmesser des Strahlengangs (3) an der Lochblende (2) haben, eine Mehrzahl solcher Bereiche (203) tangential auf der Scheibe (20) angeordnet ist und die Bereiche (203) nacheinander in den Strahlengang (3) eingeschwenkt werden (Fig. 4).

7. Wellenfrontsensor nach Anspruch 1, **dadurch gekennzeichnet**, daß der Lichtdetektor (11) möglichst genau in der Fokusebene (4) angeordnet ist.

8. Wellenfrontsensor nach Anspruch 1, **dadurch gekennzeichnet**, daß der Lichtdetektor (41) ein Lateral-Detektor mit einer Ortsauflösung im Nanometerbereich ist.

9. Wellenfrontsensor nach Anspruch 1, **dadurch gekennzeichnet**, daß die Lochblende (2) im parallelen Strahlengang angeordnet ist.

10. Wellenfrontsensor nach Anspruch 1, **dadurch gekennzeichnet**, daß die Lochblende (2) im konvergenten Strahlengang angeordnet ist.

11. Wellenfrontsensor nach Anspruch 1, **dadurch gekennzeichnet**, daß die Lochblende (2) vor dem fokussierenden optischen System (1) angebracht ist.

12. Wellenfrontsensor nach Anspruch 1, **dadurch gekennzeichnet**, daß das fokussierende optische System (1) eine telezentrische Optik (12) enthält, welche den Querschnitt der Wellenfront reduziert, und die Lochblende (2) innerhalb des fokussierenden optischen Systems (1) im parallelen Strahlengang mit reduziertem Querschnitt (34) angeordnet ist.

13. Wellenfrontsensor nach Anspruch 1, **dadurch gekennzeichnet**, daß die Lochblende (2) als elektrooptische Verschlußmatrix ausgeführt ist und die Fortschaltung durch elektronische Ansteuerung erreicht wird.

## Claims

1. Wave front sensor with
- a focussing optical system (1),
- an apertured diaphragm (2) with a plurality of holes (21) simultaneously present in coded arrangement in the ray path (3), characterised by
- an equipment (22) for the onward switching of the apertured diaphragm (2) so that a plurality of different coded arrangements of holes (21) lie one after the other in the ray path (3) and the entire cross-section of the ray path (3) is scanned together repeatedly by different coded arrangements of holes (21),
- a location-resolving light detector (41), which is arranged near the focal plane (4) of the optical system (1) and each time ascertains the position and intensity of the light spot (33), which results from the superposition of the plurality of light beams (32), which is provided by the holes (21), and
- a storage and computing unit (5), which with the use of the code of the arrangement of the holes (21) transforms the position and intensity values acertained by the light detector (41) back into phase and amplitude of the wavefront.

2. Wave front sensor according to claim 1, characterised thereby, that the code of the apertured diaphragm (2) is a Hadamard code.

3. Wave front sensor according to claim 2, characterised thereby, that the code of the apertured diaphragm (2) is a cyclical Hadamard code.

4. Wave front sensor according to claim 1, characterised thereby, that the apertured diaphragm (2) is mouned on a disc (20) and is switched onward by the rotation of the disc (20).

5. Wave front sensor according to claim 3 and 4, characterised thereby, that the holes (21) are arranged coded radially and the rotary drive takes place by a stepping motor (21) (Figure 3).

6. Wave front sensor according to claim 2 and 4, characterised thereby, that the holes (21) are arranged in orthogonally coded regions (203), which have the diameter of the ray path (3) at the apertured diaphragm (2), a plurality of such regions (203) are arranged tangentially on the disc (20) and the regions (203) are pivoted one after the other into the ray path (3) (Figure 4).

7. Wave front sensor according to claim 1, characterised thereby, that the light detector (41) is arranged as exactly as possible in the focal plane (4).

8. Wave front sensor according to claim 1, characterised thereby, that the light detector (41) is a lateral detector with a local resolution in the nanometre range.

9. Wave front sensor according to claim 1, characterised thereby, that the apertured diaphragm (2) is arranged in the parallel ray path.

10. Wave front sensor according to claim 1, characterised thereby, that the apertured diaphragm (2) is arranged in the convergent ray path.

11. Wave front sensor according to claim 1, characterised thereby, that the apertured diaphragm (2) is mounted in front of the focussing optical system (1).

12. Wave front sensor according to claim 1, the light detector (41) the focussing optical system (1) contains a telecentric optical system (12), which reduces the cross-section of the wave front and the apertured diaphragm (2) is arranged in the parallel ray path of reduced cross-section (34) within the focussing optical system (1).

13. Wave front sensor according to claim 1, characterised thereby, that the apertured diaphragm (2) is executed as electro-optical shutter matrix and the onward switching is achieved by electronic driving.

## Revendications

1. Capteur de fronts d'ondes comprenant :
- un système optique focalisant (1),
- un sténopé (2) avec une pluralité de trous (21) se trouvant simultanément dans le trajet de rayons, en un arrangement codé, caractérisé par
- un dispositif (22) pour la commutation dans le sens avant du sténopé (2), de façon qu'une multitude d'arrangements différemment codés de trous (21) se trouvent successivement dans le trajet de rayons (3) et globablement toute la section transversale du trajet des rayons (3) soit balayée plusieurs fois avec des agencements différemment codés de trous (21),
- un détecteur de lumière (41) à résolution locale disposé près du plan focal (4) du système optique (1) et qui détermine à chaque fois la position et l'intensité du point lumineux (33) qui résulte de la superposition de la pluralité de faisceaux de rayons (32) produite par les trous (21), et
- une unité de stockage et de calcul (5), qui retransforme les valeurs de position et d'intensité déterminées par le détecteur de lumière (41) en pas et amplitude du front d'ondes utilisant le code de l'arrangement des trous (21).

2. Capteur de front d'ondes selon la revendication 1, caractérisé en ce que le code du sténopé (2) est un code de Hadamard.

3. Capteur de front d'ondes selon la revendication 2, caractérisé en ce que le code du sténopé (2) est un code de Hadamard cyclique.

4. Capteur de fronts d'ondes selon la revendication 1, caractérisé en ce que le sténopé (2) est monté sur un disque (20) et peut être commuté par rotation du disque (20).

5. Capteur de fronts d'ondes selon la revendication 3 et 4, caractérisé en ce que les trous (21) sont disposés en étant radialement codés et que l'entraînement en rotation se fait à l'aide d'un moteur pas-à-pas (21) (figure 3).

6. Capteur de fronts d'ondes selon la revendication 2 et 4, caractérisé en ce que les trous (21) sont disposés dans des zones orthogonalement codées (203), qui ont le diamètre du trajet des rayons (3) au niveau du sténopé (2), qu'une pluralité de telles zones (203) sont disposées tangentiellement sur le disque (20) et les zones (203) sont amenées à pivoter successivement dans le trajet des rayons (3) (figure 4).

7. Capteur de fronts d'ondes selon la revendication 1, caractérisé en ce que le détecteur de lumière (11) est disposé le plus précisément possible dans le plan focal (4).

8. Capteur de fronts d'ondes selon la revendication 1, caractérisé en ce que le détecteur de lumière (41) est un détecteur latéral présentant une résolution locale dans la gamme de nanomètre.

9. Capteur de fronts d'ondes selon la revendication 1, caractérisé en ce que le sténopé (2) est disposé dans le trajet de rayons parallèle.

10. Capteur de fronts d'ondes selon la revendication 1, caractérisé en ce que le sténopé (2) est disposé dans le trajet de rayons convergent.

11. Capteur de fronts d'ondes selon la revendication 1, caractérisé en ce que le sténopé (2) est disposé devant le système optique focalisant (1).

12. Capteur de fronts d'ondes selon la revendication 1, caractérisé en ce que le système optique focalisant (1) comprend une optique télécentrique (12) qui réduit la section transversale du front d'ondes, et que le sténopé (2) est disposé à l'intérieur du système optique focalisant (1) dans le trajet de rayons parallèle avec une section transversale réduite (34).

13. Capteur de fronts d'ondes selon la revendication 1, caractérisé en ce que le sténopé (2) est réalisé sous forme d'une matrice de fermeture électro-optique et que la commutation progressive est obtenue par commande électronique.
